# FASCICULE DE BREVET EUROPEEN

(11) **EP 1 876 903 B1**
(45) Date de publication et mention de la délivrance du brevet: **12.08.2009**
(21) Numéro de dépôt: 06726289.9
(22) Date de dépôt: 30.03.2006
(51) Int. Cl.: A23C 19/10, A23C 19/05, A23C 19/06, A23C 19/14

(54) **PROCEDE PAR LEQUEL ON MODIFIE LES QUALITES HYGIENIQUES, PHYSICO-CHIMIQUES ET SENSORIELLES D'UN FROMAGE PAR CONTROLE DU POTENTIEL REDOX**
VERFAHREN ZUM MODIFIZIEREN DER HYGIENEEIGENSCHAFTEN, DER CHEMISCH-PHYSIKALISCHEN EIGENSCHAFTEN UND DER SENSORISCHEN EIGENSCHAFTEN VON KÄSE DURCH KONTROLLE DES REDOXPOTENTIALS
METHOD FOR MODIFYING HYGIENIC, PHYSICO-CHEMICAL AND SENSORY PROPERTIES OF CHEESE BY CONTROLLING THE REDOX POTENTIAL

(30) Priorité: 06.04.2005 FR 0503440
(43) Date de publication de la demande: 16.01.2008
(73) Titulaire: L'AIR LIQUIDE, Société Anonyme pour l'Etude et l'Exploitation des Procédés Georges Claude, 75007 Paris (FR)
(72) Inventeur: LEDON, Henry, F-78000 Versailles (FR); IBARRA, Dominique, F-91190 Gif Sur Yvette (FR)
(74) Mandataire: Mellul-Bendelac, Sylvie Lisette
(86) Numéro de dépôt international: PCT/FR2006/050275
(87) Numéro de publication internationale: WO 2006/106252

(56) Documents cités:
- WO-A-02/02748
- WO-A-98/27824
- FR-A- 2 610 795
- GB-A- 1 057 754
- RU-C- 2 220 580

## Description

La présente invention concerne le domaine de la fabrication de fromages affinés, et notamment l'étape d'affinage des fromages, et s'attache à proposer un nouveau mode de fabrication et d'affinage des fromages ayant de nouvelles propriétés sensorielles, physico-chimiques et présentant un risque réduit en terme de sécurité alimentaire.

Les réactions d'oxydo-réductions sont des étapes essentielles dans les processus de l'anabolisme et du catabolisme cellulaire, pour lesquelles le sens des échanges est régi par le potentiel d'oxydo-réduction (Eh). Le Eh est un paramètre d'état des fermentations ; sa variation modifie l'environnement physico-chimique des microorganismes. Les activités métaboliques et la physiologie des microorganismes sont déterminées par le pH intracellulaire (pHᵢₙ) qui va conditionner l'activité des enzymes et l'accessibilité de certains substrats et cofacteurs dans les réactions du métabolisme. Le pHᵢₙ est fonction du pH extracellulaire (pHₑₓ) et de l'aptitude du microorganisme à maintenir une certaine homéostasie cellulaire. La différence entre le pHᵢₙ et le pHₑₓ va également modifier la valeur de la force proto-motrice ΔµH⁺, {ΔµH⁺= ΔΨ(gradient de potentiel électrique)- ZΔpH (gradient de pH)}, qui est notamment impliquée dans les échanges de la cellule microbienne avec l'extérieur. Les paramètres Eh et pHᵢₙ sont intimement liés ; ainsi l'énergie retrouvée dans les composés à haut potentiel comme d'adénosine tri-phosphate (ATP) et gagnée par le catabolisme des substrats pourra être utilisée par la cellule pour maintenir son pHᵢₙ (et donc son ΔpH) grâce aux ATPases membranaires.

Dans les milieux alimentaires, le potentiel d'oxydo-réduction, ou Eh, est comparable au pH par le fait qu'il exprime un équilibre entre les composés oxydants et les composés réducteurs d'une composition qui peut être complexe, par exemple le lait. De nombreux travaux montrent que le Eh intervient à plusieurs niveaux dans la qualité des produits laitiers fermentés (voir par exemple les travaux de Law et al., parus en 1976 dans Journal of Dairy Research. 43: 301-311 ; les travaux de Kristoffersen et al parus en 1985 dans Milchwissenschfat. 40: 197-199; ou encore de Dave et al parus en 1997 dans International Dairy Journal: 31-41). Si l'on considère qu'il existe un Eh optimum pour le développement des flores, les propriétés oxydo-réductrices initiales du lait deviennent un facteur technologique important à prendre en compte dans la fabrication de ces produits. Ainsi, les facteurs d'élevage, comme l'alimentation, modifient les caractéristiques d'oxydo-réduction initiales du lait. Cependant, pour des fabrications fromagères industrielles dont le cahier des charges reste ouvert, on peut imaginer des moyens plus efficaces de modifier et contrôler le Eh initial du lait, agissant ainsi sur les propriétés acidifiantes et réductrices des souches de levain.

Le Eh est encore peu utilisé comme paramètre d'action et de contrôle lors de la fabrication de produits alimentaires. C'est un paramètre physico-chimique qui, de par sa nature, peut être mesuré dans tous les milieux, pourvu que ceux-ci contiennent au moins une molécule qui puisse passer d'un état oxydé à réduit et vice versa. C'est pourquoi son effet est perceptible sur toutes les fonctions cellulaires. Son action a été montrée sur différents types de souches bactériennes : L'ajout de réducteurs chimiques dans les milieux de culture a permis de modifier significativement la croissance et les flux métaboliques chez *Corynebacterium glutamicum* , *Clostridium acetobutylicum, Sporidiobolus* ruinenii et *Escherichia coli* (voir par exemple les travaux de Kwong et al parus en 1992 dans Biotechnology and Bioengineering. 40: 851-857); un abaissement de la valeur du Eh (milieu plus réducteur) fixé par des gaz, a permis de modifier les flux métaboliques chez *Saccharomyces cerevisiae* avec une augmentation du ratio glycérol/éthanol et l'accumulation des sucres de réserve avec augmentation de la survie des levures lors de la conservation (voir FR-2.811.331 au nom de la Demanderesse).

En milieu industriel, le rôle du Eh est déjà indirectement pris en compte au travers de l'oxygène dissous dont l'effet inhibiteur sur les bactéries lactiques est bien identifié. Cet effet est dû à leur incapacité à synthétiser des cytochromes et les enzymes à noyau hème.

Il est aussi possible en agissant sur le Eh de modifier la survie des ferments probiotiques, les flux métaboliques, la production et/ou la stabilité des molécules d'arômes. L'ensemble de ces résultats a été obtenu suite à une modification du Eh par les microorganismes eux-mêmes, par des molécules oxydo-réductrices ou par traitement thermique.

Certaines bactéries lactiques sont connues pour posséder des propriétés réductrices fortement exprimées dans le lait modifiant ainsi les propriétés d'oxydo-réduction du milieu. L'impact de ces modifications est encore à étudier dans le fromage. Pourtant, d'anciens travaux (tels que ceux de Kristoffersen et al parus en 1964 dans Journal of Dairy Science. 47: 743-747; ou ceux de Green et al parus en 1982 dans Journal of Dairy Research. 49: 737-748) ont montré que, dans des fromages de Cheddar, un Eh négatif pouvait induire des qualités sensorielles plus stables et plus appréciées.

RU-C-2 220 580 décrit le traitement d'un mélange laitier par l'azote. Ce mélange laitier est utilisé pour la fabrication de fromages affinés. GB-A-1 057 754 décrit un procédé de fabrication d'un fromage affiné dans lequel l'étape d'affinage est effectuée sous une atmosphère contrôlée comprenant de l'azote afin d'éliminer les gaz oxydants.

Un des objectifs de la présente invention est alors de proposer un nouveau mode de fabrication des fromages ayant de nouvelles propriétés sensorielles, physico-chimiques et présentant un risque réduit en terme de sécurité alimentaire.

On rappellera que la fabrication d'un fromage affiné suit des étapes extrêmement complexes et variées selon le type de fromage visé, selon les traditions de chaque genre de fromage et région d'origine etc... atteignant plusieurs centaines voire milliers de procédés différents, mais comprend couramment à tout le moins les étapes suivantes :
- La préparation des laits de fabrication, en général en les stabilisant microbiologiquement (traitement thermique tel que la pasteurisation ou encore traitement physique tel que l'ultrafiltration) et en ajustant leur composition physico-chimique (matières grasses, protéines ...).
- La coagulation qui peut être de trois types : coagulation présure (action dominante de la présure), coagulation lactique (action dominante des ferments) et la coagulation mixte.
- L'égouttage, qui est l'étape de concentration des éléments du lait. Les liaisons moléculaires au sein du coagulum provoquent une contraction du réseau qui expulse alors le lactosérum (eau, protéines sériques, lactose, minéraux solubles etc...). L'égouttage a lieu soit par simple gravité, y compris dans un dispositif autonome de type tunnel, soit il est effectué et accéléré par différentes opérations parmi lesquelles on trouve par exemple la centrifugation, le découpage, le pressage, le retournement, le traitement thermique...
- L'affinage, étape optionnelle non pratiquée pour certains fromages tels les fromages frais, est une phase plus ou moins longue de maturation dans des conditions définies de température, d'humidité de l'atmosphère, pendant laquelle ont lieu des réactions chimiques, biochimiques, enzymatiques ainsi que le développement de la flore de surface. Dans certains cas, l'affinage peut avoir lieu en partie ou en totalité sous film. Le fromage est alors en premier lieu mis sous vide sous un matériau plastique ayant des perméabilités à la vapeur d'eau et aux gaz spécifiques.

Comme on le verra ci-dessous, le procédé de préparation d'un fromage selon l'invention est remarquable en ce que l'on procède à l'une ou à chacune des mesures suivantes :
- on procède, avant l'étape d'ensemencement, au traitement du mélange laitier par un gaz de traitement comportant de l'hydrogène pour obtenir une valeur du potentiel redox Eh du mélange laitier désirée qui soit inférieure à la valeur obtenue quand le mélange laitier est en équilibre avec l'air;
- tout ou partie de l'étape d'affinage est effectuée sous une atmosphère d'affinage réductrice comportant de l'hydrogène.

Selon la présente invention, on donnera néanmoins une préférence aux gaz et mélanges de gaz choisis parmi les gaz actuellement autorisés, selon la plupart des réglementations en vigueur, en contact alimentaire, à savoir N₂, O₂, CO₂, He, Ar, N₂O, H₂, même si on le sait, la réglementation subit régulièrement des évolutions.

A cette fin, le fromage est placé après sa fabrication dans une enceinte ou encore un sac étanche contenant un tel gaz ou mélange gazeux.

L'invention concerne alors un procédé de fabrication d'un fromage affiné présentant des propriétés organoleptiques améliorées, du type où l'on procède durant l'une des étapes du procédé de fabrication à un ensemencement d'un mélange laitier avec une ou plusieurs souches de bactéries lactiques, et où l'on procède à une étape d'affinage du fromage fabriqué, et se caractérisant en ce que en ce que l'on procède à l'une ou à chacune des mesures suivantes :
- on procède, avant l'étape d'ensemencement, au traitement du mélange laitier par un gaz de traitement comportant de l'hydrogène pour obtenir une valeur du potentiel redox Eh du mélange laitier désirée qui soit inférieure à la valeur obtenue quand le mélange laitier est en équilibre avec l'air;
- tout ou partie de l'étape d'affinage est effectuée sous une atmosphère d'affinage réductrice comportant de l'hydrogène.

Le procédé selon l'invention peut également adopte l'une ou plusieurs des caractéristiques techniques suivantes :
- ladite atmosphère réductrice est obtenue à partir d'un gaz réducteur, ou d'un mélange d'un gaz neutre et d'un gaz réducteur.
- aux fins d'effectuer tout ou partie de l'étape d'affinage sous atmosphère réductrice, le fromage est placé après sa fabrication dans une enceinte ou encore un emballage étanche contenant une telle atmosphère.
- ladite valeur du potentiel redox désirée est inférieure à +250 mV.
- ladite valeur du potentiel redox désirée est inférieure d'au moins 100 mV à la valeur obtenue quand le mélange laitier est en équilibre avec l'air.
- ladite valeur du potentiel redox désirée est négative.
- l'ensemencement du mélange laitier est effectué de manière indirecte par le fait que l'on effectue au préalable une ou plusieurs pré-cultures successives afin de constituer l'inoculum qui servira à ensemencer le mélange laitier, et l'on procède également à un traitement de la préculture en traitant son milieu de croissance par un gaz de pré-traitement permettant d'obtenir une valeur de potentiel redox inférieure à la valeur qui serait obtenue en l'absence de traitement.
- l'un ou plusieurs desdits gaz de traitement ou de pré-traitement ou atmosphère d'affinage est de l'hydrogène.
- l'un ou plusieurs desdits gaz de traitement ou de pré-traitement ou atmosphère d'affinage comprend de l'hydrogène et un gaz complémentaire acceptable du point de vue dudit fromage considéré.
- le gaz complémentaire est choisi parmi les gaz inertes, notamment argon, hélium, et parmi l'oxygène, le dioxyde de carbone et le protoxyde d'azote et leurs mélanges en toutes proportions, de préférence parmi le dioxyde de carbone et l'oxygène ainsi que leurs mélanges.
- une partie de l'affinage est réalisée de façon traditionnelle (i.e selon la ou les pratiques du site utilisateur considéré, par exemple sous air, sous gaz comme le CO₂....sous film, ou en chambre...) et une partie de l'affinage est réalisée sous ladite atmosphère d'affinage réductrice (on conçoit que l'on pourra alors adopter des séquences très variées telles que atmosphère/air, air/atmosphère, air/atmosphère/air etc...mais aussi l'alternance de phases d'affinage sous film/sous atmosphère réductrice/sous film etc...et obtenir ainsi selon les cas visés un meilleur contrôle de l'évolution du produit).
- le fromage est ensuite conservé sous atmosphère contrôlée jusqu'à sa date limite d'utilisation optimale (« dluo ») ou sa date limite de consommation (« dlc »).

Le traitement du mélange laitier (ou le prétraitement de la préculture) à l'aide d'un gaz ou mélange gazeux est obtenu selon l'un des procédés bien connus de l'homme du métier tel que bullage au travers du mélange laitier à l'aide d'un fritté, d'une membrane ou d'un poreux, agitation par une turbine à arbre creux, utilisation d'un hydro-injecteur, contacteur à film tombant, pulvérisation du liquide dans une chambre sous atmosphère contrôlée,...

Un ou plusieurs points d'injection de gaz peuvent être utilisés dans les cuves de réception et de stockage du lait, des cuves de standardisation, des cuves d'enrichissement, des cuves d'inoculation ou des cuves tampon intermédiaires. Des injections en ligne peuvent êtres également réalisées sur diverses parties de canalisation des installations de production.

Préférentiellement, on procèdera à un contrôle, voire une régulation de la teneur en humidité dans l'enceinte d'affinage.

De même préférentiellement, on procèdera à un contrôle, voire une régulation de la teneur en gaz réducteur utilisé pour l'affinage, par exemple l'hydrogène, dans l'enceinte d'affinage. On sait en effet que certains fromages donnent lieu à la production d'espèces gazeuses et notamment du CO₂, donc il est prévisible que dans un tel cas la teneur en gaz réducteur dans l'atmosphère d'affinage va varier avec le temps, d'où l'intérêt de la contrôler voire la réguler.

D'autres caractéristiques et avantages de l'invention ressortiront des exemples ci-dessous détaillés.

### Exemple 1 : Influence des conditions réductrices sur la fabrication et l'affinage d'un fromage à pâte pressée non cuite au lait pasteurisé

Le protocole suivant a été réalisé : 4 modalités de fabrication et d'affinage différentes ont été testées afin d'être en mesure de dissocier l'effet de la fabrication de celui de l'affinage sur les caractéristiques sensorielles des fromages (voir tableau 1 ci-dessous). Quatre répétitions de chacune des modalités ont été réalisées, soit au total 16 fromages de 1 kg chacun fabriqués.

**Tableau 1 : Description des 4 modalités de fromages fabriqués.**

| | | **FABRICATION** | |
|---|---|---|---|
| | | **Sous atmosphère réductrice** (*Fabrication dans l'isolateur)* | **Avec libre échange d'air** (*Fabrication à la fromagerie*) |
| **AFFINAGE** | **Sous atmosphère réductrice** *(en sacs étanches*) | **N°1** | **N°2** |
| | **Avec échange d'air** *(en sacs perméables)* | **N°3** | **N°4** |

L'atmosphère réductrice mise en oeuvre était un mélange de 96% azote et 4% hydrogène (exprimé en volume). La durée de l'affinage pratiqué était de 8 semaines.

Le levain utilisé est un levain mésophile commercial constitué d'un mélange de souches de Lactococcus lactis subsp. lactis et de Lactococcus lactis subsp. cremoris. Il s'agit du levain commercialisé sous le nom de MA 011 (Mésophiles acidifiants traditionnels, de chez Danisco). Ce levain est non-gazogène pour les besoins du conditionnement sous sachets étanches pendant l'affinage. Le levain a été ensemencé dans la cuve sous forme lyophilisée à la dose de 0.77 U/100L de lait en levain lyophilisé ou 0.4-0.5% (VN) en équivalent levain sur lait. La présure (700 mg/L de chymosine active, de chez Danisco) a été utilisée à la dose de 0.27 mL/kg de lait.

Les fromages ont été fabriqués soit selon une méthode traditionnelle à l'air sans autre précaution particulière que les règles de bonne pratique d'hygiène en particulier de qualité microbiologique de l'air ambiant (« fabrication à la fromagerie »), soit dans une enceinte hermétique dite isolateur, munie d'un dispositif de balayage de gaz et d'analyse de la composition de l'atmosphère (« fabrication dans l'isolateur »).

Pendant la fabrication dans l'isolateur, le taux d'oxygène ambiant était maintenu inférieur à 1%. Le lait de fabrication a été bullé pendant environ 30 min avec le gaz réducteur pour baisser la teneur en oxygène dissous.

Le suivi de la réduction en cuve et dans les fromages au démoulage, ainsi que le suivi de la teneur en oxygène dissous, ont été réalisés avec un enregistrement en continu avec des électrodes Mettler-Toledo. Les résultats de potentiel redox sont exprimés en Eh7, i.e ramené au pH = 7 (par des formules bien connues de l'homme du métier comme l'équation de Leistner et Mirna qui permet d'exprimer le Eh mesuré d'un milieu de pH = x à sa valeur calculée à pH = 7). Ceci permet de comparer les valeurs entre-elles quelque soit la température et le pH auxquels elles ont été mesurées.

Après bullage, une différence moyenne de Eh7 d'environ 250 mV entre les deux laits de cuve est observée en début de fabrication (« isolateur » *versus* « fromagerie »).

Pour l'affinage sous atmosphère réductrice, les fromages ont été enfermés dans des sacs plastiques ayant une barrière à l'oxygène élevée. Ces sacs ont été soudés à l'intérieur de l'isolateur puis immédiatement re-soudés à l'extérieur pour renforcer l'étanchéité. Dans chacun de ces sacs, ont été placés deux absorbeurs d'oxygène afin de prévenir une éventuelle entrée d'oxygène dans les sacs durant l'affinage. Pour affiner les fromages avec un libre échange d'air, des sacs plastiques en polyéthylène simple ont été utilisés pour éviter un dessèchement intense des fromages affinés avec échange d'air par rapport aux autres.

Le tableau 2 ci-dessous présente le plan des analyses microbiologiques et physico-chimiques réalisées sur le lait et les fromages aux différents stades de fabrication.

**Tableau 2 : Plan des analyses microbiologiques et physico-chimiques réalisées sur le lait et les fromages aux différents stades de fabrication.**

| **Stades de fabrication** | **Lait de report** | **Lait pasteurisé** | **Lait standardisé** | **Lait de cuve ensemencé** | **Fromage fin affinage** |
|---|---|---|---|---|---|
| **Physico-chimie** | ↓ Matières | | ↓ Matières | | ↓ pH |
| | Protéiques (MP) | | Protéiques (MP) | | ↓ Extrait sec (ES) |
| | ↓ Matières Grasses | | ↓ Matières | | ↓ Gras/Sec (G/S) |
| | (MG) | | Grasses (MG) | | ↓ NACl |
| **Microbiologie** | ↓ Flore Mésophile | ↓ Flore Mésophile | | ↓ Lactocoques | ↓ Lactocoques |
| | Aérobie Revivifiable | Aérobie Revivifiable | | | principalement |
| | (FMAR) ou Flore | (FMAR) ou Flore Totale | | | ↓ Coliformes |
| | Totale | ↓ Coliformes totaux | | | totaux |

### Résultats micro-biologiques (tableau 3)

On observe notamment la présence de coliformes en fin d'affinage, qui sont issus, soit du lait de fabrication avec un développement important au cours de la fabrication et de l'affinage, soit d'une post-contamination. Quelque soit l'origine de ces coliformes totaux, les résultats montrent que leur développement n'a pas été influencé par le mode de fabrication mais fortement influencé par le mode d'affinage : 190 000 ufc/g sous air comparé à 4 800 ufc/g sous gaz soit un facteur 40. Le niveau des lactocoques en fin d'affinage est significativement augmenté par un affinage sous gaz : 910 millions ufc/g sous gaz comparé à 130 millions ufc/g sous air soit un facteur 7.
Pour des raisons pratiques, le dénombrement des flores de certains échantillons de fromage a été réalisé après congélation à -20°C et décongélation des échantillons.

**Tableau 3 : Moyennes des populations comptées en fin d'affinage sur les fromages avant ou après congélation à -2O°C**

| | **Fromages "frais" en sortie d'affinage** | | **Fromages affinés et décongelés** | | | | | | |
|---|---|---|---|---|---|---|---|---|---|
| **Populations en log ufc/g⁻¹⁰** | Coli. | Lactocoques | Coli. | Psychrotr. | LHF | Entérocoques | GRAM - | Microcoques pâte | Microcoques croûte |
| **Fab isolateur** | **4,80** | **7,98** | **4,95** | **5,39** | **< 1000** | **5,84** | **5,33** | **6,14** | **8,79** |
| **Fab fromagerie** | **5,10** | **8,08** | **4,82** | **4,46** | **6,78** | **4,73** | **5,02** | **5,49** | **8,82** |
| **Affinage sous gaz** | **3,68** | **8,96** | **< 100** | **4,50** | **5,89** | **3,47** | **< 10000** | **3,84** | **5,75** |
| **Affinage sous air** | **5,27** | **8,10** | **5,19** | **5,39** | **6,72** | **5,87** | **5,49** | **6,23** | **9,11** |

A la grande surprise de la Demanderesse, les niveaux de coliformes comptés en fin d'affinage sur des échantillons décongelés montrent que le mode d'affinage a influencé la résistance de ces germes à la congélation.

En effet pour les coliformes, la population revivifiable après congélation représente 3% de la population revivifiable avant congélation pour l'affinage sous gaz alors qu'elle représente 83% pour l'affinage avec échange d'air, ce qui représente une amélioration considérable en terme de sécurité alimentaire. L'état physiologique des coliformes au moment de la congélation, c'est-à-dire juste à la sortie de l'affinage, devait être différent. Ils semblent avoir été plus sensibilisés au stress thermique par l'affinage sous gaz.

Les dénombrements réalisés sur les fromages après décongélation sont évidemment à prendre avec précaution puisqu'ils cumulent l'effet des facteurs principaux "mode de fabrication" et "mode d'affinage" avec l'effet de la congélation qui peut agir en interaction avec les effets des "mode de fabrication" et "mode d'affinage". En effet, le mode de fabrication a eu un effet significatif sur le niveau des lactobacilles mésophiles hétérofermentaires après décongélation. Il est cependant difficile de dire à ce stade si c'est un effet sur le développement de cette population ou un effet sur leur état physiologique au moment de la congélation qui aurait engendrer une différence de résistance des cellules à la congélation. Cette population est reconnue pour être une flore d'affinage productrice d'arôme mais peut également être responsable de défauts de goût. La fabrication en isolateur pourrait donc ralentir la maturation des fromages ou en permettre une meilleure maîtrise. De façon générale, l'affinage sous atmosphère réductrice semble bloquer le développement des flores d'altération, voire des flores pathogènes (bactéries GRAM-).

Le développement de flore de microcoques de croûte est également extrêmement ralentie lors de l'affinage sous gaz : 560 000 ufc/g à comparer à 1 300 000 000 ufc/g sous air. Ceci confère au fromage affiné sous gaz une croûte ayant un aspect « propre » et « sain » semblable à celle d'un fromage après démoulage, au contraire d'un fromage affiné sous air qui présente un flore jaune-orangée sur 70 à 100% de leurs surface.

### Résultats physico-chimiques

Le lait cru était analysé en matières grasse et protéique pour être standardisé à chaque fabrication. Les analyses statistiques ont montré que le mode de fabrication a significativement influencé le rapport Gras/Sec et le taux d'Humidité du Fromage Dégraissé mesurés en fin d'affinage.

On remarque également que le temps de coagulation (TC) est en moyenne plus long pour les fabrications dans l'isolateur. Or, un temps de coagulation plus long augure souvent d'un coagulum moins ferme, engendrant des pertes de matière grasse plus importantes dans le lactoserum au moment du décaillage. En effet, le rapport Gras/Sec a été fortement influencé par le mode de fabrication, de façon cohérente, puisque les fromages fabriqués dans l'isolateur sont en moyenne moins gras que les fromages fabriqués à la fromagerie.

L'influence du mode de fabrication sur l'HFD (Humidité du Fromage Dégraissé : i.e. indépendamment de la matière grasse) montre que la proportion d'eau dans les fromages en fin d'affinage dépend également du mode de fabrication. Les fromages les plus humides sont ceux fabriqués à la fromagerie. L'exudation du lactosérum peut avoir été influencée par le mode de fabrication ou par une différence de décaillage. L'effet du mode de fabrication sur l'HFD semble modulé par le mode d'affinage. Les conditions d'emballage des fromages pendant l'affinage ont été efficaces puisque le mode d'affinage n'a pas directement influencé la teneur en eau des fromages. L'effet du mode de fabrication sur l'HFD peut avoir influencé la perception des juges concernant les descripteurs de texture comme on le verra plus loin.

La concentration en NaCl a été influencée par le mode de fabrication alors que le même bain de saumure et la même durée ont été utilisés pour tous les fromages. Une composition physico-chimiques un peu différente des caillés peut avoir engendrer des différences de texture et donc des différences d'absorption du NaCl.

Le pH en fin d'affinage se révèle statistiquement très différent d'un mode d'affinage à l'autre, alors que le mode de fabrication n'est, cette fois, pas du tout influent. Les fromages affinés avec un libre échange d'air ont un pH plus élevé en moyenne ( pHmoy = 5.80) que les fromages affinés sous atmosphère réductrice (pHmoy = 5.31). Le pH des fromages affinés avec libre échange d'air est remonté pendant l'affinage (pHmoy = 5.07 à 20 heures) probablement grâce aux flores de surface et d'affinage qui s'y sont développées contrairement aux fromages affinés sous atmosphère réductrice dont la surface est indemne.

Le tableau 4 permet de connaître l'état d'avancement de la protéolyse des fromages en fonction de leur mode de fabrication et d'affinage.

**Tableau 4 : moyennes (écarts-types) des déterminations des fractions azotées par modes de fabrication et d'affinage - NT est l'azote total contenu dans l'échantillon de fromage ; NS est la fraction d'azote soluble dans l'eau de cet échantillon et représente les gros fragments de protéolyse (activité, majoritairement enzymatique, et bactérienne) ; PTA est la fraction d'azote soluble, soluble dans l'acide phosphotungstique et représente les petits fragments de la protéolyse fine (activité bactérienne, surtout bactéries lactiques).**

| **Moyennes selon les modes** | **NS/NT (%)** | **PTA/NT (%)** | **PTA/NS (%)** |
|---|---|---|---|
| **Fabrication Isolateur (n=8)** | **21.36** | 4.48 | **21.17** |
| | *(*± *2.18)* | *(*± *0.65)* | *(*± 3.90) |
| **Fabrication Fromagerie (n=8)** | **20.93** | **4.40** | **21.11** |
| | *(*± *2.09)* | *(*± *0.47)* | *(*± 1.96) |
| **Affinage sous atmosphère** | **19.59** | **4.44** | **22.64** |
| **réductrice (n=8)** | *(*± *0.65)* | *(*± *0.65)* | *(*± 3.29) |
| **Affinage avec libre échange d'air** | **22.70** | **4.44** | **19.64** |
| **(n=8)** | *(*± *2.00)* | *(*± *0.46)* | *(*± *1.92)* |

On observe que le mode de fabrication n'influence pas ou peu les ratios des fractions azotées les unes par rapport aux autres. Par contre, le mode d'affinage influence quantitativement et qualitativement l'état d'avancement de la protéolyse. En effet, le ratio NS/NT représente la proportion de fragments peptidiques totaux, gros et petits, solubles dans l'eau, issus de la protéolyse enzymatique (protéolyse primaire), mais aussi issus de l'activité bactérienne (protéolyse secondaire) de la flore du lait cru et des levains. Le ratio PTA/NS représente, à l'intérieur de cette fraction soluble, la proportion de petits peptides (< 600 Da) et acides aminés issus de la protéolyse secondaire, c'est-à-dire une protéolyse fine. La protéolyse totale (NS/NT) est plus importante dans les fromages affinés sous air que dans les fromages affinés sous gaz (P < 5%). Différentes flores : flores de surface, flores naturelles du lait et flores de re-contamination, se sont développées dans ces fromages affinés sous air. Ces populations ont sûrement eu une activité protéolytique, de type protéasique, qui a augmenté la proportion de peptides sans augmenter la proportion de petits peptides et acides aminés (PTA/NT) par une activité peptidasique. Ces populations n'ont donc pas favorisé une protéolyse secondaire pendant l'affinage sous air. Dans les fromages affinés sous gaz, même si la protéolyse totale (NS/NT) est moins importante, la protéolyse secondaire est proportionnellement plus importante (PTA/NS) que dans les fromages affinés sous air (P < 5%). Cet effet est significatif mais dépend du jour de fabrication (P < 5%). Les lactocoques, à un niveau 10 fois plus important dans les fromages affinés sous gaz que dans les fromages affinés à l'air (10⁹ ufc/g contre 10⁸ ufc/g, respectivement), sont responsables d'une protéolyse fine et poussée. De plus, la protéolyse secondaire élimine, dans le fromage, les peptides amers générés par la protéolyse primaire. Cette capacité des lactocoques semble être souche dépendante. Or, les fromages fabriqués et affinés sous air se sont révélés plus amers, en cohérence avec ces résultats.

### Résultats sensoriels

Un jury de 12 juges entraînés a établi le profil sensoriel de chaque fromage en évaluant un ensemble de descripteurs sensoriels couvrant les domaines de la texture, des saveurs et des arômes.

Les résultats des tests de profils de l'évaluation sensorielle ont été traités statistiquement par deux méthodes : l'analyse de la variance et la régression « Partial Least Square » (PLS) linéaire. Au vu des premiers résultats de profils sensoriels, le mode d'affinage semblait influencer de façon évidente les différences entre les fromages par rapport au mode de fabrication, l'un donnant des fromages plus forts en goût que l'autre. Afin de ne pas perdre l'information sur le mode de fabrication, un test de dégustation par paire de fromages ayant eu le même affinage a été réalisé par les 12 juges. Les résultats des tests de dégustation par paires ont été modélisés par une analyse de la variance également avec une pondération pour les niveaux de difficulté de réponse.

Les analyses statistiques montrent que le facteur technologique le plus influent est l'affinage. L'absence d'interaction entre les facteurs "fabrication" et "affinage" prouve que leurs effets sont additifs et que les effets de l'un sont indépendants des effets de l'autre.

Les analyses statistiques expriment un effet très marqué du mode d'affinage sur les descripteurs de texture, de saveurs (acide) et de goût (intensité de goût), particulièrement sur les groupes d'arômes. Les fromages affinés sous atmosphère réductrice ont développé des arômes plus doux, moins intenses alors que les fromages affinés la même durée à l'air ont développé des arômes intenses et évolués. Les effets observés sont présentés au tableau 5.

**Tableau 5 : Synthèse des résultats des tests par profils en comparant la régression PLS et l'analyse de la variance.**

| Fromages de la fromagerie | Fromages de l'isolateur | Fromages affinés Avec air | Fromages affinés sous gaz |
|---|---|---|---|
| **Caractéristiques fortes confirmées par les deux tests (analyse de la variance et régression PLS)** | | | |
| **Adhésivité** | **Blanc d'oeuf cuit dur (élasticité)** | **Intensité de goût** | **Pâteux** |
| **Impression d'humidité** | | **Intensité aromatique** | **Acidité** |
| **Amertume** | | **Arôme : lactique évolué** | **Arôme : lactique acidifié** |
| | | **Arôme : torréfié grillé** | |
| | | **Arôme : animal** | |

| ***Tendances mises en évidence par un des deux tests (analyse de la variance ou régression PLS)*** | | | |
|---|---|---|---|
| *Intensité de goût* | *Fermeté* | *Amertume* | *Fermeté* |
| *Solubilité* | | *Déformabilité* | *Adhésivité* |
| | | *Blanc d'oeuf cuit dur (élasticité)* | |

Le mode de fabrication semble influencer plus particulièrement les descripteurs de texture et la saveur amère des fromages. Par contre, le mode de fabrication n'influence pas les descripteurs d'arômes. Les fromages fabriqués à la fromagerie ayant un taux de matière grasse et une teneur en eau plus élevés n'ont pas donné une impression de gras beaucoup plus élevée mais ont généré une impression d'humidité en bouche plus importante que les fromages fabriqués dans l'isolateur.

### Résultats sur l'aspect des fromages

Lors de la préparation des échantillons pour l'évaluation sensorielle, l'aspect extérieur et intérieur des fromages a été noté. Pour l'aspect des fromages également, le mode d'affinage semble le plus influent. En effet, les fromages affinés sous atmosphère réductrice présentaient une surface parfaitement saine ayant le même aspect que les fromages au démoulage. Ces derniers avaient une proportion de trous plus importante en moyenne que les fromages affinés avec un libre échange d'air. Ils étaient plus épais et moins affaissés, avec une pâte plus ferme. Les fromages affinés avec un libre échange d'air avaient une proportion de leur surface couverte d'une flore « poisseuse » jaune-orangée comprise entre 70 et 100%. Ils avaient l'aspect de fromages plus avancés en affinage (fromages "bien faits", voire "trop faits") avec une pâte plus tendre, un peu affaissés sur eux-mêmes.

### Exemple 2 : Comparaison de fromages affinés sous trois atmosphères différentes (air, azote, et azote/hydrogène)

Le protocole suivant a été réalisé : à partir de lait issu d'une même traite et pasteurisé, 3 fromages à pâte pressée non cuite de 1 kg ont été fabriqués. Le premier fromage a ensuite été affiné sous air, le second sous azote, et le troisième sous azote/hydrogène (96/4). Ce protocole a été répété trois fois.

Le levain utilisé est un levain mésophile commercial constitué d'un mélange de souches de *Lactococcus lactis* subsp. *lactis* et de *Lactococcus lactis* subsp. *cremoris.* Il s'agit du levain commercialisé sous le nom de MA 011 (Mésophiles acidifiants traditionnels, Danisco). Ce levain est non-gazogène pour les besoins du conditionnement sous sacs pendant l'affinage. Le levain a été ensemencé dans la cuve sous forme lyophilisée à la dose de 0.77 U/100L de lait en levain lyophilisé ou 0.4-0.5% (VN) en équivalent levain sur lait. La présure (700 mg/L de chymosine active, Danisco) a été utilisée à la dose de 0.27 mUkg de lait.

Pour l'affinage, tous les fromages ont été enfermés dans des sacs à gants identiques de façon à assurer les mêmes taux d'humidité pour l'affinage. Ces sacs ont été thermosoudés. Leur conditionnement en atmosphère d'affinage a été réalisé par un circuit étanche constitué d'une vanne par sac d'affinage permettant d'entrer ou de sortir le gaz. Tous les sacs (même les sacs à l'air) ont été vidés et reconditionnés chaque semaine de façon à pallier une éventuelle perméabilité du matériau des sacs et ainsi prévenir une modification de l'atmosphère d'affinage. Tous les fromages ont été ainsi affinés dans des caves d'affinage à 12-13°C avec une humidité relative supérieure à 91%.

Lors de la mise en sac, un pot de 100 ml environ de morge et un pinceau ont été introduits avec chaque fromage. La morge est une solution aqueuse saturée en sel, contenant une flore halotolérante constituée de bactéries et de levures. Les levures appartiennent aux genres *Candida, Kluyveromyces, Débaryomyces et Rhodotorula.* La flore bactérienne renferme des corynéformes (*B. Linens*) et *Micrococcaceae* (Piton, 1990). Les 9 pots proviennent du même seau de morge. La flore de surface est apportée sur le fromage par frottage avec le pinceau à raison de 2 fois par semaine pendant les 3 premières semaines, puis une seule fois par semaine ensuite.

### Analyses microbiologiques

L'analyse de la variance montre que le taux de Lactobacilles mésophiles hétérofermentaires en fin d'affinage a été influencé par le mode d'affinage (voir tableau 6, niveau de test P=7%). Ces bactéries semblent donc être favorisées par une atmosphère non réductrice (air ou azote), quelque soit le taux d'oxygène de l'atmosphère d'affinage. Le mode d'affinage « hydrogène » aurait donc tendance à affecter le développement de cette population au cours de l'affinage.

**Tableau 6 : Moyennes en log10 (UFC/g) dans les fromages en fin d'affinage.**

| **Niveaux d'affinage** | **Air** | **N₂** | **N₂/H₂** |
|---|---|---|---|
| Lactobacilles mésophiles hétérofermentaires | 4.0 | 3.7 | 2.0 |

### Analyses physico-chimiques

L'extrait sec en fin d'affinage a été également influencé par le mode d'affinage (voir tableau 7). Les fromages affinés sous air ont exsudé plus d'eau que les fromages affinés sous azote et plus encore que les fromages affinés sous azote-hydrogène qui sont les plus humides en fin d'affinage. Les sacs d'emballage ne peuvent pas être à l'origine de ces différences d'exsudation puisque tous les fromages ont été affinés dans les mêmes sacs et conditionnés sous gaz en même temps chaque fin de semaine avec strictement le même protocole. Seul le métabolisme (présence ou absence de dégagement d'ammoniac, le degré de protéolyse...) peut avoir influencé la proportion de matière sèche par rapport à l'eau dans les fromages au cours de l'affinage en modifiant l'état de l'eau dans le fromage.

**Tableau 7 : Moyennes en % des extraits secs des fromages en fin d'affinage.**

| **Niveaux d'affinage** | **Air** | **N₂** | **N₂/H₂** |
|---|---|---|---|
| Extrait sec (%) | 54.06 | 52.99 | 51.56 |

### Analyse des composés volatiles

Les composés volatils (autres que les acides gras volatiles) ont été quantifiés par chromatographie couplée à un spectromètre de masse. Les acides gras volatiles ont également été quantifiés par chromatographie, à l'aide de solutions étalons.

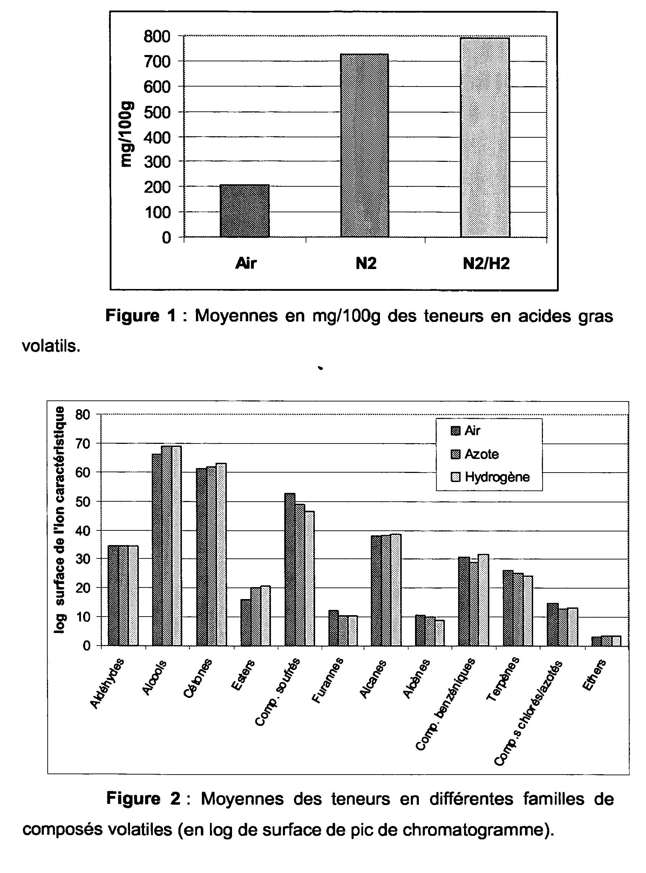

La figure 1 montre que la teneur en acides gras volatiles des fromages affinés sous air était plus faible que celle des fromages affinés sous azote, elle-même ayant tendance à être plus faible que celle des fromages affinés sous azote/hydrogène.

De même la figure 2 montre par exemple, que plus l'atmosphère d'affinage est réductrice plus les fromages ont tendance à produire des cétones. Inversement, moins l'atmosphère d'affinage est réductrice plus les fromages contiennent des composés soufrés, des alcènes ou des terpènes.

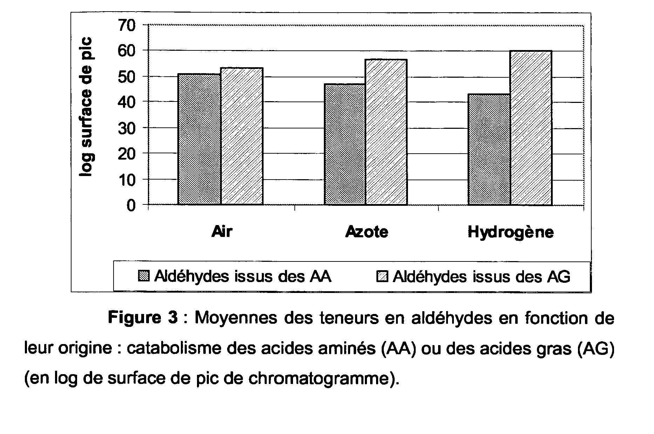

La figure 3 montre quant à elle qu'en fonction de l'atmosphère d'affinage l'origine des aldéhydes est variables. Plus l'atmosphère est réductrice plus les aldéhydes sont majoritairement issus du catabolisme des acides gras. Plus l'atmosphère est oxydante, plus les aldéhydes sont issus du catabolisme des acides aminés.

### Analyse sensorielle

Un jury de 11 juges entraînés a dégusté et noté les 9 fromages le jour de leur sortie d'affinage par série de fabrication, soit 3 fromages dégustés en 3 séances d'évaluation sensorielle. L'ordre de présentation des fromages a été déterminé selon les tables de Macfie et al. L'objectif des tests de profils était de différencier et caractériser les 3 modalités d'affinage.

Les fromages issus des affinages sous azote et sous azote/hydrogène ont également été comparés par paire pour analyser quelle était l'influence de la présence de l'hydrogène dans l'atmosphère d'affinage. Les résultats des tests de profils de l'évaluation sensorielle ont été traités statistiquement par deux méthodes : l'analyse de la variance, et la régression Partial Least Square (PLS) linéaire.

Ces analyses statistiques ont montrés que d'un point du vue sensoriel, les fromages affinés sous les différentes atmosphères étaient significativement différents.

Les descripteurs de saveur ont été très influencés par le mode d'affinage. Les fromages affinés sous air sont très nettement amers et non sucrés alors que les fromages affinés sous hydrogène ont tendance à être plus acides et plus sucrés.

Par ailleurs, les fromages affinés sous azote ont développé plutôt moins d'arômes que les autres fromages, et les fromages affinés sous air ont une amertume qui a tendance à masquer la diversité aromatique. Cependant, certains arômes ont été notés très différemment selon le mode d'affinage notamment les arômes de la famille "lactique". Les fromages affinés sous air sont nettement notés principalement "lactique évolué" (goût de croûte) avec un consensus parfait des juges, il en est de même pour les fromages affinés sous hydrogène. Les fromages affinés sous azote sont notés clairement "lactique chauffé". Les fromages affinés sous air sont également notés "torréfié fort".

L'analyse par paires avait pour but de discriminer les fromages affinés sous hydrogène des fromages affinés sous azote puisqu'au terme des dégustations individuelles des fromages, les fromages de ces deux affinages se sont avérés les plus proches. Le tableau 8 résume les résultats de l'analyse de la variance sur ces données en ne présentant que les descripteurs significativement différents pour ces deux affinages.

**Tableau 8 : Résultats de l'analyse de la variance réalisée sur les données des dégustations par paires en comparant un fromage affiné sous azote et un fromage affiné sous azote/hydrogène ;**

| | | Le mode **N₂ est plus** « *[descripteur]* » que le mode N₂/H₂ | Le mode **N₂/H₂ est plus** « *[descripteur] »* que le mode N₂ |
|---|---|---|---|
| **Descripteurs** | Déformabilité | | * |
| | Fermeté | *** | |
| | Blanc d'oeuf cuit | * | |
| | Solubilité | | * |
| | Intensité de goût | * | |
| | Lactique acidifié | | * |
| | Lactique chauffé | ** | |
| | Alliacé soufré | * | |

| | | | |
|---|---|---|---|
| *: significatif à P<5% ; **: significatif à P<1%; ***: significatif à P<0,1%. | | | |

Le tableau 8 confirme les différences de texture entre ces deux modes d'affinage. Les fromages affinés sous azote sont plus "fermes" et plus "blanc d'oeuf cuit dur" et donc moins "déformables" que les fromages affinés sous hydrogène. Les fromages affinés sous hydrogène sont définitivement plus solubles que les fromages affinés sous azote. Cette évaluation par paires confirme également les différences de goût et d'arômes. Les fromages affinés sous azote ont un goût plus intense. Ils sont plus "lactique chauffé" et "alliacé soufré". Enfin, les fromages affinés sous hydrogène sont notés "lactique acidifié".

### Aspect des fromages

Pour l'aspect des fromages, le mode d'affinage semble également influent.

En effet, les fromages affinés sous air avaient une surface orangée couverte d'une flore uniformément répartie sur tout le fromage. Ces derniers avaient des trous en moyenne plus gros que les fromages affinés sous gaz spéciaux. La flore de surface semble s'être plus développée sur les fromages affinés sous hydrogène que sur ceux affinés sous azote.

## Revendications

1. Procédé de fabrication d'un fromage affiné présentant des propriétés organoleptiques améliorées, du type où l'on procède durant l'une des étapes du procédé de fabrication à un ensemencement d'un mélange laitier avec une ou plusieurs souches de bactéries lactiques, et où l'on procède à une étape d'affinage du fromage fabriqué, et **se caractérisant en ce que** l'on procède à l'une ou à chacune des mesures suivantes :
- on procède, avant l'étape d'ensemencement, au traitement du mélange laitier par un gaz de traitement comportant de l'hydrogène pour obtenir une valeur du potentiel redox Eh du mélange laitier désirée qui soit inférieure à la valeur obtenue quand le mélange laitier est en équilibre avec l'air;
- tout ou partie de l'étape d'affinage est effectuée sous une atmosphère d'affinage réductrice comportant de l'hydrogène.

2. Procédé de fabrication d'un fromage affiné selon la revendication 1, **caractérisé en ce que** aux fins d'effectuer tout ou partie de l'étape d'affinage sous une telle atmosphère réductrice, le fromage est placé après sa fabrication dans une enceinte ou encore un emballage étanche contenant une telle atmosphère.

3. Procédé de fabrication d'un fromage affiné selon l'une des revendications 1 ou 2, **caractérisé en ce que** le traitement du mélange laitier permet l'obtention d'une valeur du potentiel redox Eh du mélange laitier qui est inférieure à +250 mV.

4. Procédé de fabrication d'un fromage affiné selon la revendication 3, **caractérisé en ce que** la valeur du potentiel redox est inférieure d'au moins 100 mV à la valeur obtenue quand le mélange laitier est en équilibre avec l'air.

5. Procédé de fabrication d'un fromage affiné selon la revendication 3, **caractérisé en ce que** ladite valeur du potentiel redox est négative.

6. Procédé de fabrication d'un fromage affiné selon l'une des revendications précédentes, **caractérisé en ce que** l'ensemencement du mélange laitier est effectué de manière indirecte par le fait que l'on effectue au préalable une ou plusieurs pré-cultures successives afin de constituer l'inoculum qui servira à ensemencer le mélange laitier, et **caractérisé en ce que** l'on procède également à un traitement de la préculture en traitant son milieu de croissance par un gaz de pré-traitement permettant d'obtenir une valeur de potentiel redox inférieure à la valeur qui serait obtenue en l'absence de traitement.

7. Procédé de fabrication d'un fromage affiné selon l'une des revendications précédentes, **caractérisé en ce** l'un ou plusieurs desdits gaz de traitement ou de pré-traitement ou atmosphère d'affinage est de l'hydrogène.

8. Procédé de fabrication d'un fromage affiné selon l'une des revendications 1 à 6, **caractérisé en ce** l'un ou plusieurs desdits gaz de traitement ou de prétraitement ou atmosphère d'affinage comprend de l'hydrogène et un gaz complémentaire acceptable du point de vue dudit fromage considéré.

9. Procédé de fabrication d'un fromage affiné selon la revendication 9, **caractérisé en ce que** le gaz complémentaire est choisi parmi les gaz inertes, notamment argon, hélium, et parmi l'oxygène, le dioxyde de carbone et le protoxyde d'azote et leurs mélanges en toutes proportions, de préférence parmi le dioxyde de carbone et l'oxygène ainsi que leurs mélanges.

10. Procédé de fabrication d'un fromage affiné selon l'une des revendications précédentes, **caractérisé en ce que** une partie de l'affinage est réalisée de façon traditionnelle sous air ou sous une autre atmosphère, et une partie de l'affinage est réalisée sous ladite atmosphère d'affinage réductrice comportant de l'hydrogène.

11. Procédé de fabrication d'un fromage affiné selon l'une des revendications précédentes, **caractérisé en ce que** le fromage est ensuite conservé sous atmosphère contrôlée jusqu'à sa date limite d'utilisation optimale (« dluo ») ou sa date limite de consommation (« dlc »).

## Claims

1. Method for manufacturing a ripened cheese having enhanced organoleptic properties, which consists, during one of the steps of the manufaturing method, in inoculating a dairy mixture with one or more lactic bacterial strains, and in carrying out a step of ripening the manufactured cheese, and which is **characterized in that** one or each of the following steps is carried out:
- prior to the inoculating step, the dairy mixture is processed with a processing gas comprising hydrogen so as to obtain a desired redox potential Eh value for the dairy mixture which is less than the value obtained when the dairy mixture is in equilibrium with the air;
- all or part of the ripening step is carried out under a reducing ripening atmosphere comprising hydrogen.

2. Method for manufacturing a ripened cheese according to Claim 1, **characterized in that**, for the purposes of carrying out all or part of the ripening step under such a reducing atmosphere, the cheese is placed, after its manufacture, in a chamber or else a packaging which is leaktight and which contains such an atmosphere.

3. Method for manufacturing a ripened cheese according to either of Claims 1 and 2, **characterized in that** the processing of the dairy mixture makes it possible to obtain a redox potential E value for the dairy mixture which is less than +250 mV.

4. Method for manufacturing a ripened cheese according to Claim 3, **characterized in that** the redox potential value is at least 100 mV less than the value obtained when the dairy mixture is in equilibrium with the air.

5. Method for manufacturing a ripened cheese according to Claim 3, **characterized in that** said redox potential value is negative.

6. Method for manufacturing a ripened cheese according to one of the preceding claims, **characterized in that** the inoculation of the dairy mixture is carried out indirectly due to the fact that one or more successive precultures are carried out beforehand in order to constitute the inoculum which will be used to inoculate the dairy mixture, and **characterized in that** the preculture is also processed by processing its growth medium with a pre-processing gas which makes it possible to obtain a redox potential value which is less than the value that would be obtained in the absence of processing.

7. Method for manufacturing a ripened cheese according to one of the preceding claims, **characterized in that** one or more of said processing or pre-processing gases or ripening atmosphere is hydrogen.

8. Method for manufacturing a ripened cheese according to one of Claims 1 to 6, **characterized in that** one or more of said processing or pre-processing gases or ripening atmosphere comprises hydrogen and a supplementary gas which is acceptable from the point of view of said cheese under consideration.

9. Method for manufacturing a ripened cheese according to Claim 8, **characterized in that** the supplementary gas is chosen from inert gases, in particular argon and helium, and from oxygen, carbon dioxide and nitrous oxide, and mixtures thereof in any proportions, preferably from carbon dioxide and oxygen, and mixtures thereof.

10. Method for manufacturing a ripened cheese according to one of the preceding claims, **characterized in that** a part of the ripening is carried out conventionally under air or under another atmosphere, and a part of the ripening is carried out under said reducing ripening atmosphere comprising hydrogen.

11. Method for manufacturing a ripened cheese according to one of the preceding claims, **characterized in that** the cheese is subsequently conserved under a controlled atmosphere until its best before date ("BBD") or its use by date ("UBD").

## Patentansprüche

1. Verfahren zur Herstellung eines verfeinerten Käses mit verbesserten sensorischen Eigenschaften derart, daß man während einem der Schritte des Herstellungsverfahrens eine Milchmischung mit einer oder mehreren Milchsäurebakterien inokuliert und daß man einen Verfeinerungsschritt des hergestellten Käses durchführt, **dadurch gekennzeichnet, daß** man eine oder jede der folgenden Maßnahmen trifft:
- man führt vor dem Inokulationsschritt die Behandlung der Milchmischung durch ein Behandlungsgas, das Wasserstoff enthält, durch, wodurch man einen gewünschten Redoxpotentialwert Eh der Milchmischung erhält, der unter dem Wert, den man erhält, wenn sich die Milchmischung im Gleichgewicht mit der Luft befindet, liegt;
- der Verfeinerungsschritt wird ganz oder teilweise unter einer reduzierenden Verfeinerungsatmosphäre, die Wasserstoff enthält, durchgeführt.

2. Verfahren zur Herstellung eines verfeinerten Käses nach Anspruch 1, **dadurch gekennzeichnet, daß** man, um den Verfeinerungsschritt ganz oder teilweise unter solch einer reduzierenden Atmosphäre durchzuführen, den Käse nach seiner Herstellung in ein dichtes Schutzgehäuse bzw. eine dichte Verpackung, das/die solch eine Atmosphäre enthält, gibt.

3. Verfahren zur Herstellung eines verfeinerten Käses nach Anspruch 1 oder 2, **dadurch gekennzeichnet, daß** es die Behandlung der Milchmischung gestattet, einen Redoxpotentialwert Eh der Milchmischung, der unter +250 mV liegt, zu erhalten.

4. Verfahren zur Herstellung eines verfeinerten Käses nach Anspruch 3, **dadurch gekennzeichnet, daß** der Redoxpotentialwert um mindestens 100 mV niedriger als der Wert, den man erhält, wenn sich die Milchmischung im Gleichgewicht mit der Luft befindet, ist.

5. Verfahren zur Herstellung eines verfeinerten Käses nach Anspruch 3, **dadurch gekennzeichnet, daß** dieser Redoxpotentialwert negativ ist.

6. Verfahren zur Herstellung eines verfeinerten Käses nach einem der vorhergehenden Ansprüche, **dadurch gekennzeichnet, daß** die Inokulation der Milchmischung indirekt erfolgt, und zwar **dadurch**, daß man zuvor eine oder mehrere aufeinanderfolgende Vorkulturen durchführt, um das Inokulum zu erhalten, das später zum Inokulieren der Milchmischung dienen wird, **dadurch gekennzeichnet, daß** man auch eine Behandlung der Vorkultur **dadurch** durchführt, daß man ihr Wachstumsmedium mit einem Vorbehandlungsgas behandelt, die es gestattet, einen Redoxpotentialwert zu erhalten, der unter dem Wert liegt, der ohne diese Behandlung erhalten würde.

7. Verfahren zur Herstellung eines verfeinerten Käses nach einem der vorhergehenden Ansprüche, **dadurch gekennzeichnet, daß** dieses eine bzw. diese mehreren Behandlungsgas(e) oder Vorbehandlungsgas(e) oder Verfeinerungsatmosphäre(n) Wasserstoff ist/sind.

8. Verfahren zur Herstellung eines verfeinerten Käses nach einem der Ansprüche 1 bis 6, **dadurch gekennzeichnet, daß** dieses eine bzw. diese mehreren Behandlungsgas(e) oder Vorbehandlungsgas(e) oder Verfeinerungsatmosphäre(n) Wasserstoff und ein ergänzendes Gas, das hinsichtlich des entsprechenden Käses annehmbar ist, umfaßt/umfassen.

9. Verfahren zur Herstellung eines verfeinerten Käses nach Anspruch 9, **dadurch gekennzeichnet, daß** das ergänzende Gas aus der Reihe der Inertgase, insbesondere Argon, Helium, und aus der Reihe Sauerstoff, Kohlendioxid und Lachgas sowie ihren Mischungen in allen Verhältnissen stammt, vorzugsweise aus der Reihe Kohlendioxid und Sauerstoff sowie ihren Mischungen.

10. Verfahren zur Herstellung eines verfeinerten Käses nach einem der vorhergehenden Ansprüche, **dadurch gekennzeichnet, daß** ein Teil der Verfeinerung traditionell unter Luft oder einer sonstigen Atmosphäre und ein Teil der Verfeinerung unter der genannten reduzierenden Verfeinerungsatmosphäre, die Wasserstoff enthält, durchgeführt wird.

11. Verfahren zur Herstellung eines verfeinerten Käses nach einem der vorhergehenden Ansprüche, **dadurch gekennzeichnet, daß** der Käse anschließend bis zu seinem Mindesthaltbarkeitsdatum oder seinem Verfallsdatum unter kontrollierter Atmosphäre aufbewahrt wird.
